# EUROPEAN PATENT APPLICATION

(11) **EP 1 172 726 A2**
(43) Date of publication of application: **16.01.2002**
(21) Application number: 01305914.2
(22) Date of filing: 09.07.2001
(51) Int. Cl.: G06F 9/44

(54) **Pervasive computing device and method**

(30) Priority: 13.07.2000 US 615857
(71) Applicant: International Business Machines Corporation, Armonk, NY 10504 (US)
(72) Inventor: Rogalski, Mark Daniel, IBM United Kingdom Ltd., Winchester, Hampshire SO21 2JN (GB)
(74) Representative: Richards, John Peter

(57) **Abstract**

A system and method for running native and non-native applications in a pervasive computing device. Both native and non-native applications are rendered into a common display. Non-native applications include applications executed on a second computer attached to the pervasive computing device over a computer network such as the Internet. Non-native application are rendered in a window encapsulated by a micro-browser.
Non-native applications include applications providing HTML or Java code to the pervasive device. An application manager receives non-native application code and renders the code using the micro-browser. The look and feel between native and non-native applications is maintained.

## Description

The present invention relates to a pervasive computing device and method.

Computer systems in general and International Business Machines (IBM) compatible personal computer systems in particular have attained widespread use for providing computer power to many segments of today's modern society. Systems with microprocessors are finding themselves in an array of smaller and more specialized objects that previously were largely untouched by computer technology. These devices are sometimes called "pervasive computing systems" because of their appearance as both traditionally computerized devices, such as desktop computers, tower computers, and portable computers, as well as newly computerized devices such as telephones, appliances, automobiles, and other devices. Pervasive computing devices often include a system processor and associated volatile and non-volatile memory, a display area, input means, and often interfaces, such as a network interface or modem, to other computing devices.

One of the distinguishing characteristics of these systems is the use of a system board to electrically connect these components together. These pervasive computing devices are information handling systems which are designed primarily to give independent computing power to a single user, or a group of users in the case of networked pervasive computing devices. Pervasive computing devices are often inexpensively priced for purchase by individuals or businesses. A pervasive computing device may also include one or more I/O devices (i.e. peripheral devices) which are coupled to the system processor and which perform specialized functions. Examples of I/O devices include modems, sound and video devices or specialized communication devices. Nonvolatile storage devices such as hard disks, CD-ROM drives and magneto-optical drives are also considered to be peripheral devices. Pervasive computing devices are often linked to computing systems and other pervasive computing devices using a network, such as a local area network (LAN), wide area network (WAN), or other type of network such as the Internet. By linking to computers including pervasive computing devices, a pervasive computing device can use resources owned by another computing device. These resources can include files stored on nonvolatile storage devices and resources such as printers.

Pervasive computing devices are often designed to perform a specialized function that has native applications related to the function being performed. For example, a cellular telephone may be a pervasive computing device and may have a telephone directory as a native application. The telephone directory application can store names and phone numbers the user of the cellular phone wishes to store for easy retrieval. It may also be advantageous to execute non-native applications on the pervasive computing device that are not necessarily directly related to the function performed by the device and therefore use widely accepted languages, such as the Hypertext Markup Language (HTML) and Java. A challenge with traditional pervasive computing devices is displaying both native applications and non-native applications on a common display while maintaining the look and feel of the pervasive computing device.

Also, the resources of the pervasive computing device are constrained. For example, a pervasive computing device is often a mobile device, such as a cellular telephone, that draws power from a battery-based power source and has a small form factor to aid in the portability of the device. In constrained pervasive computing devices, the processor may be slower than found in other computer systems. In addition, the amount of random access memory (RAM) may be far less than found in traditional desktop computer systems. Moreover, because of the small form factor, the display is usually smaller and the resolution poorer than in monitors attached to traditional desktop systems. Nonvolatile storage on pervasive computing systems may be limited to nonvolatile memory, such as flash memory, rather than magnetic media such as disk drives (i.e., floppy disks, hard drives, Zip disks, etc.). These constraints may prevent the pervasive computing device from running Java applications using a heavyweight Abstract Windowing Toolkit (AWT) for visually displaying the Java output. In addition, the graphics capabilities of the pervasive computing device may vary significantly and be less than that found in desktop computer systems, so that porting Java applications is further challenged.

It is an object of the invention to provide an improved pervasive computer device and method capable of handling both native and non native applications efficiently.

This object is met by the invention claimed in the appended claims.

In an embodiment of the invention, native and non-native applications can be displayed on a pervasive computing device using an application manager and a micro-browser to orchestrate and coordinate the display. The application manager displays on-screen buttons which provide a mechanism for starting applications. If a user invoked button is associated with a native application, that application is started. If the button is associated with a non-native application, then the application manager starts a micro-browser which is capable of displaying the application. The "look and feel" of the display, for example the size and position of windows on the display, is controlled by theme information provided to the application manager. In this manner, non-native applications are rendered onto the micro-browser with a look and feel consistent with native applications. The application manager may also display command buttons on the display screen. When a user presses one of these buttons, an event is generated and sent to an application. The button bars may include command buttons for both the native and non-native applications. When a user presses a command button, an event occurs. In addition, other system events may occur from time to time. Events are generated by an event generator within the application manager and are sent to event handlers associated with the native and non-native applications. The event handlers, in turn, handle the events and may send graphic responses to the native application window (in the case of a native application event) or to the non-native application window (in the case of a non-native application event). Non-native applications may execute in other computer systems connected to the pervasive computing device using a computer network, such as the Internet. The display information from such non-native applications is received by the pervasive computing device and rendered in a micro-browser running in the pervasive computing device.

The present invention will now be desribed, by way of example only, with reference to a preferred embodiment thereof, as illustrated in the accompanying drawings, in which:
**Figure 1** is a block diagram of a pervasive computing device according to a preferred embodiment of the present invention;
**Figure 2** is a block diagram of the interaction between the application manager and the micro-browser according to a preferred embodiment of the present invention;
**Figure 3** is a drawing of a pervasive computing device showing the micro-browser being displayed according to a preferred embodiment of the present invention;
**Figure 4** is a flowchart of pervasive computing device integrating native and non-native applications according to a preferred embodiment of the present invention; and
**Figure 5** is a block diagram of an information handling system capable of implementing the present invention.

The use of the same reference symbols in different drawings indicates similar or identical items.

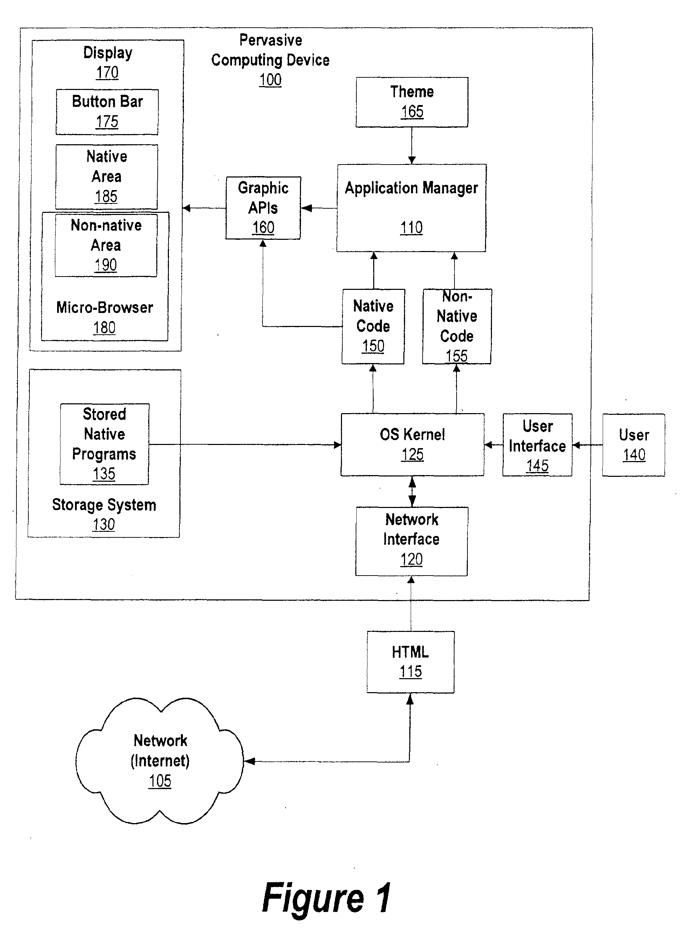

**Figure 1** shows a block diagram of pervasive computing device **100** and network **105**, such as the Internet, interconnected to provide non-native applications, such as HTML and Java to the pervasive device. Other computer systems connected to network **105** are accessed by pervasive computing device **100** and responsively provide graphical display code **115**, usually in the form of HTML or Java code (even though display code can be other display codes already implemented or codes yet to be developed and implemented). Graphical display code **115** is received by network interface **120** coupled to pervasive computing device **100**. Network interface **120** may be imbedded within pervasive computing device **100**, such as an on-board Ethernet card or on-board modem, or may be an external device attached to pervasive computing device **100** using PC-MCIA cards implementing interface operations (such as a local area network (LAN) card or modem card). Network interface **120** is used both to receive graphical display code **115** as well as receive other information from network **105** and is further used to communicate information and requests to other computer systems attached to network **105**.

Operating system kernel **125** coordinates the operation and manages events that occur within pervasive computing device **100**. Operating system kernel **125** may perform the operations directly or may use specialized device drivers that manage a particular type of device. One of the operations operating system kernel **125** manages is sending and receiving data from network interface **120**.

Operating system kernel **125** also reads and executes stored native programs **135** stored in storage system **130**. Pervasive computing device **100** may be a robust computing device complete with nonvolatile storage devices such as hard drives or other magnetic drives that store the data managed by storage system **130**. In more constrained pervasive computing environments, such as those where pervasive computing device has a small form factor limiting the amount of space within the device and in devices using battery power sources, storage system **130** may use nonvolatile memory, such as flash memory, to store native programs used by the device. Native program code **150** (read from storage system **130**) and non-native code **155** (such as HTML and Java code received from network interface **120**) calls application manager **110** to coordinate the display of information to the user.

Upon being invoked (i.e., when pervasive computing device **100** is booted), application manager **110** reads theme **165** from a configuration file stored on pervasive computing device **100**. Theme **165** includes operational parameters that determine how application manager **110** displays information in display **170**. For example, if the screen display included in pervasive computing device **100** is quite small, theme **165** may direct application manager to display only one application at a time. Theme **165** may also be used to provide instructions to application manager **110** as to how the screen display is divided among multiple applications. Application manager **110** calls graphic APIs **160** to render graphics into display **170**. In this manner, theme **165** and graphic APIs **160** may be altered for a different pervasive computing device with a different set of constraints. Application manager **110** coordinates the display of objects within button bar **175**, native area **185**, and non-native area **190** that is encapsulated by micro-browser **180**. Button bar **175** includes command buttons for both native area **185** and non-native area **190** displayed on display.

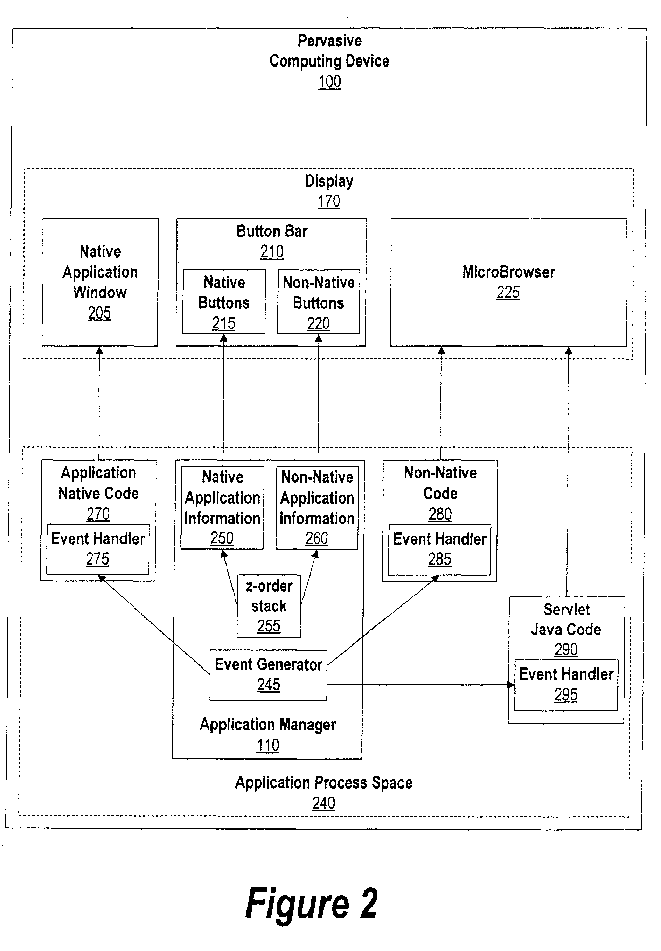

**Figure 2** shows a block diagram of events occurring and being handled within application process space **240** operating within pervasive computing device **100**. Application process space **240** includes application manager **110**, application native code **270** read from storage system **130**, and non-native code **280** and **290**. Application native code **270** includes event handler **275** that handles events related to the native application. Likewise, non-native code includes event handlers to handle events that relate to non-native applications. Non-native applications are shown divided into non-native code **280** (i.e., HTML) that includes event handler **285** and Servlet Java code **290** (i.e., Java code) that includes event handler **295**. The event handlers handle the events that occur and may also cause graphical information to display in a native application window or in a micro-browser window in order to communicate the event to the user.

Application manager **110** includes event generator **245** used to generate event information and send the information to the correct event handler. Z-order stack **255** is a stack to keep track of the order of native and non-native window applications currently executing within pervasive computing device **100**. Application manager **110** also maintains native application information **250** that includes operational information pertaining to native applications, as well as non-native application information **260** that includes operational information pertaining to non-native applications.

Native application information **250** and non-native application information **260** include information about command buttons needed for the native and non-native applications. The command button information is used by application manager **110** to configure and render button bar **210** within display **170**. Button bar **210** includes native buttons **215** for native applications and non-native buttons **220** for the non-native applications running within pervasive computing device **100**. When a user selects a command button from button bar **210**, the information is used by event generator **245** to generate an event to be handled by the associated event handler.

Display **170** includes button bar **210**, native application window **205**, and micro-browser window **225**. Micro-browser window **225** encapsulates non-native windows relating to non-native code **280** and Servlet Java Code **290**. As the name implies, native application window **205** is used to display applications native to pervasive computing device **100**. In one embodiment, one native application window exists for each native application currently running in pervasive computing device **100**. These windows can be displayed concurrently or one window can be displayed while the others are hidden. Whether the windows are displayed or hidden results from the constraints and restrictions found within pervasive computing device **100** including its display screen. Micro-browser **225** is used to display non-native applications, such as HTML applications and Java based applications. Again, in one embodiment a micro-browser window is created for each non-native application currently running in pervasive computing device **100**. Whether the windows are displayed concurrently or one at a time depends on the constraints of the pervasive computing device. In addition, some pervasive computing devices may only display one application, native or non-native, at a given time with other applications' displays hidden from view until they are selected by the user. Native code **270** uses graphic APIs (see **Figure 1**) to render the graphics into native application window **205**. In the case of non-native applications, the HTML or Java code is indirectly rendered into micro-browser **225** in order for such non-native applications to have the same look and feel of native applications. In this manner, the look and feel of display **170** is kept consistent between the various native and non-native applications that are executed. Character fonts and sizes and positional display aspects of non-native applications can therefore conform to the look and feel designed for a particular pervasive computing device.

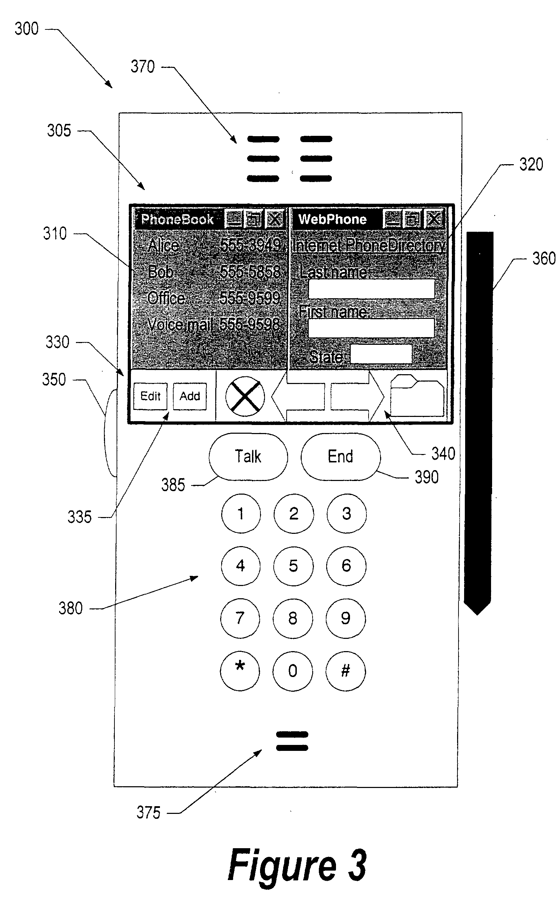

**Figure 3** shows an example pervasive computing device that is configured to operate as pervasive computing telephone **300**. Pervasive computing telephone **300** includes display screen **305** for displaying native application window **310**, micro-browser window **320**, and button bar **330**. Button bar **330** includes native application command buttons **335** and non-native application buttons **340**. Native application window **310** is similar to phone directories used in cellular telephones. The user enters contact names and phone numbers in native application window **310** and then selects the name/number when he or she wishes to have the cellular telephone dial the number. Native command buttons **335** associated with the native phone book include a button to edit the contact information and a button to add a new contact. Pointing device **360** is used to select command buttons. In addition, other selection means such as thumb selector **350**, a trackball or tracking area (not included in pervasive computing telephone **300**) can be attached to or included with the pervasive computing device to make selection of command buttons. In addition, voice recognition software can be used to allow voice commands, such as "CLICK EDIT" to click the edit command button and perform other functions. Voice recognition software would be used in pervasive computing telephone **300** by saying commands into microphone **375**. Microphone **375** is also used for telephone communication once a phone call has been placed. Speaker **370** is used for telephone communication as well as for receiving audible information from a native or non-native application. Keypad **380** contains numeric keys for easy entry of phone numbers. For other applications, the pervasive computing device might contain alphanumeric keys or other specialized keys depending on the device's intended function.

Display **305** also includes non-native application **320**. Non-native application **320** shown in **Figure 3** is a phone directory service. The user enters the person's name and state and non-native application **320** returns a list of phone numbers from the directory. Non-native application **320** resides on a server connected to the Internet. The user of pervasive computing telephone **300** connects to the Internet using a wireless modem included with pervasive computing telephone **300**. The server sends HTML code to pervasive computing telephone **300** whereupon the application manager running in telephone **300** uses the installed theme to render the HTML code in micro-browser **300**. Non-native application buttons **340** include web browsing buttons to instruct the browser to stop loading the current page ("X" graphic), to return to the previous page (left arrow), go forward to the next page (right arrow), and list favorite, or book marked, web sites (file folder). When the user presses any of the non-native application buttons **340**, the non-native application receives the event and performs the requested action.

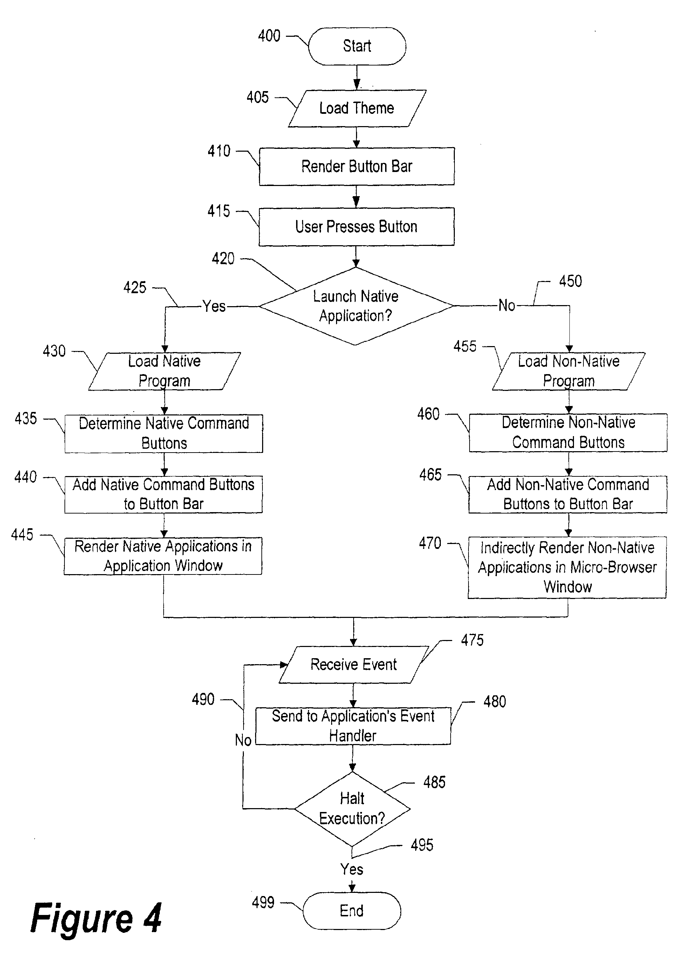

**Figure 4** is a flowchart depicting the logic involved in loading the application manager and managing the micro-browser. The program flow commences at **400** whereupon the application manager loads the theme for the pervasive device (input **405**). The application manager then renders the button bar in the display (step **410**) so that the user can view and select buttons from the button bar. The user selects an application (step **415**) by clicking on the button related to an application he or she wishes to launch. This step is repeated (along with the subsequent steps) for each application the user wishes to launch. The system determines whether the user has selected a native or a non-native application to launch (decision **420**). If the application is a native application, "yes" branch **425** is taken whereupon the native application is loaded from non-volatile storage attached to the pervasive computing device (input **430**). The system determines whether additional buttons specific to the native application need to be included in the button bar based upon information provided by the native application (step **435**). If additional command buttons are needed, the application-specific buttons are added to the button bar (step **440**). The native application is rendered to the display so that the user can use the application (step **445**). On the other hand, if the application in decision **420** is a non-native application, "no" branch **450** is taken whereupon the non-native application is loaded into the pervasive computing device (input **455**). Since the application is not native to the pervasive computing device, the application may be loaded by accessing a computer network, such as the Internet, and receiving the application display information from another computer (i.e., a server) also connected to the computer network. The system determines whether additional buttons specific to the non-native application need to be included in the button bar based upon information provided by the non-native application (step **460**). If additional command buttons are needed, the application-specific buttons are added to the button bar (step **465**). The non-native application is rendered to the display so that the user can use the application (step **470**). The non-native application is indirectly rendered onto the display using the parameters found in the theme file loaded in input **405**. By using the theme file, the non-native application, such as HTML or Java code, is rendered using the micro-browser in a manner similar to the display of the native applications. In this way, the non-native applications maintain a similar look and feel as their native counterparts.

The application manager receives various events that occur in the pervasive computing device (input **475**). When an event is received, the application manager determines which application should handle the event and passes the event information onto the event handler of the native or non-native application (step **480**). If the user stops execution of the pervasive computing device by turning the device off or suspending the device, decision **485** branches to "yes" branch **495** and execution stops at termination **499**. On the other hand, while the pervasive computing device is operating, "no" branch **490** is repeatedly taken looping back to receive further events.

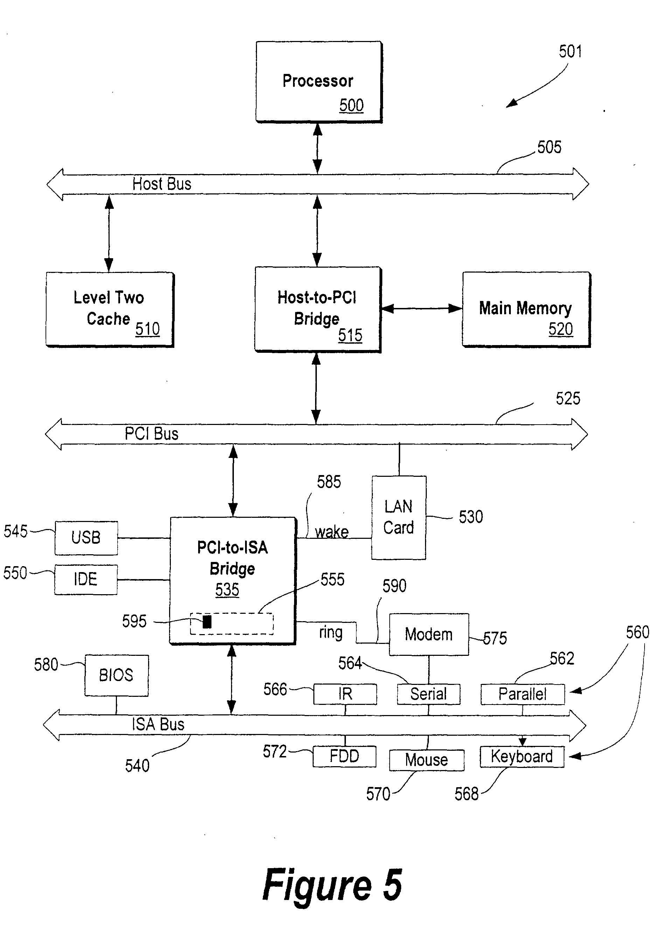

**Figure 5** illustrates information handling system **501** which is a simplified example of a pervasive computing device capable of providing the application manager and micro-browser functions described herein. Computer system **501** includes processor **500** which is coupled to host bus **505**. A level two (L2) cache memory **510** is also coupled to the host bus **505**. Host-to-PCI bridge **515** is coupled to main memory **520**, includes cache memory and main memory control functions, and provides bus control to handle transfers among PCI bus **525**, processor **500**, L2 cache **510**, main memory **520**, and host bus **505**. PCI bus **525** provides an interface for a variety of devices including, for example, LAN card **530**. PCI-to-ISA bridge **535** provides bus control to handle transfers between PCI bus **525** and ISA bus **540**, universal serial bus (USB) functionality **545**, IDE device functionality **550**, power management functionality **555**, and can include other functional elements not shown, such as a real-time clock (RTC), DMA control, interrupt support, and system management bus support. Peripheral devices and input/output (I/O) devices can be attached to various interfaces **590** (e.g., parallel interface **592**, serial interface **594**, infrared (IR) interface **599**, keyboard interface **598**, mouse interface **570**, and fixed disk (FDD) **572**) coupled to ISA bus **540.** Alternatively, many I/O devices can be accommodated by a super I/O controller (not shown) attached to ISA bus **540.**

BIOS **580** is coupled to ISA bus **540**, and incorporates the necessary processor executable code for a variety of low-level system functions and system boot functions. BIOS **580** can be stored in any computer readable medium, including magnetic storage media, optical storage media, flash memory, random access memory, read only memory, and communications media conveying signals encoding the instructions (e.g., signals from a network). In order to attach computer system **501** another computer system to copy files over a network, LAN card **530** is coupled to PCI-to-ISA bridge **535**. Similarly, to connect computer system **501** to an ISP to connect to the Internet using a telephone line connection, modem **575** is connected to serial port **594** and PCI-to-ISA Bridge **535**.

While the computer system described in **Figure 5** is capable of executing the copying processes described herein, this computer system is simply one example of a computer system. Those skilled in the art will appreciate that many other computer system designs are capable of performing the copying process described herein.

The following describes a detailed implementation of the foregoing using the Neutrino operating system that uses the Photon graphics environment. The Neutrino operating system is selected because of its limited resource needs making it well suited for a constrained pervasive computing environment.

The Application Manager is a Photon application built with the aid of the Photon Application Builder Tool (phAB). The primary functions of the Manager are:
1. Partition the display into Button Bars and Application Area according to a Theme.
2. Control what application buttons are displayed on the Button Bars.
3. Launch and control applications.
4. Route selected GUI events to applications.
5. Route selected hardware events to applications.
6. Logon users

A *Theme* is a configuration file provided by the device content provider to give the user interface a specific look and feel. It includes definitions of window areas and placement of Button Bars within those areas. It defines what set of buttons are available and what icons are used for those buttons. There may be multiple themes on a device and the user may switch between them.

A *Button Bar* is a Manager created window which can display application buttons. There may be multiple bars in various positions. At least one bar should display Home and Help buttons. Button Bars in this embodiment are always visible. The reasons for this are:
1. Allows the user to immediately and simply choose another application.
2. Confused users will always have available the Home and Help buttons.
3. The hardware is not guaranteed to have a Home button.

A bar's location is fixed by the Theme configuration file being used for the currently logged in user. The reasons for this are:
1. The content provider can easily partition the screen as needed to display ads and content.
2. Giving the user freedom to move bars might adversly affect content layout.

The URL activated by the Home button is specified in the home.data which is a standard Button configuration file.

The *Application Area* takes the remainder of the screen between the button bars. Within the ISRF specification, this area is called the *Terminal Manager Area.* All applications display in this area. The Manager can further partition the Application Area into windows so that multiple applications may displayed simultaneously. Only one button's applications are visible at a time, and applications may not overlap.

The Home screen is a static or dynamically generated HTML/JavaScript page displayed by default in the Application Area and is displayed via a micro-browser owned by the application manager. It may display logos, advertisements, or additional web-based application buttons. Note that *web-based* in this context means apps that render via static or dynamically generated HTML/JavaScript pages. A button on the Home screen can link directly to another HTML page to be displayed in the micro-browser or back to a local servlet. In the latter case, the servlet can request a new URL to be loaded.

The Application Manager actually consists of several pieces running in different processes:

Application Manager is launched on boot of the pervasive computing device. The application manager displays the button bars and launches all applications. When a button is activated (pressed), the application manager starts the button's associated apps and keeps track of app z-order. The application manager's event generator sends System Events to an application by sending an inter-process communication (IPC) message to the appropriate process. The application manager also manages user logons. When the Logon button is activated, the Application manager queries the home path to determine what users are available and displays them on a logon screen. When the user then selects one, the Application manager will prompt for a password (if one was recorded) and logon that user. The display is reconfigured according to that user's theme.

An Application manager library is included as a native object file that native applications link with in order to call the application manager API. This completely encapsulates the IPC mechanism.

A Java Shell runs within a Java Virtual Machine (JVM), and consists of a Java version of the application manager API set and native methods which link to the Application manager library in order to call the genuine Application Manager API.

The micro-browser sub-component is a Photon application invoked by the Application manager to display web or servlet based applications. It basically encloses a PtWebClient widget which can display HTML and JavaScript. Since each pane is an independent Photon window, it can be switched away from and back to and will still show the same graphical data. Having a micro-browser run as a separate process provides programming consistency within the Application manager and security should a web-based application cause a fault.

All applications that wish to be displayed in accordance with the Application Manager are coded to register with the Manager and handle events from the Manager. Native applications are each started in their own Photon session. Web-based applications may be displayed in their own micro-browser or in a common micro-browser. Using a common micro-browser saves resources but increases the time required to switch between apps because URLs are reloaded. Note that any web-based app can be displayed in a micro-browser, but only local servlets and native apps can call Manager API or receive system events. Buttons used to invoke applications may reside in two different places:

### A. On a button bar:

Application buttons residing on a Button Bar can be native or web-based. Buttons are displayed on a bar by installing a button data file in the directory specified by the ButtonInfoDirectory field of a theme file.

### B. On a web page:

Application buttons are installed on a web page by modifying the HTML displayed in a micro-browser. If the page is static, this is done my modifying the HTML file. If the page is dynamically generated, then it is changed by the local servlet producing the page. How a servlet accomplishes this is independent of the Application manager. A web-based button may directly invoke a new URL to load in the micro-browser or may invoke servlet code which could ask the Application manager to activate a hidden button.

### Application implementation requirements:

In this embodiment, native applications are required to:
1. Compile with the shelllib.h header file to get Application Manager API prototypes.
2. Link with the shelllib.o object file to get addressability to Application Manager API.
3. Implement an eventHandler function to handle receiving system events.
4. Call RegisterApplication on instantiation to inform Application manager that app is running.
5. Call GetApplicationArea to set size and location of app's display window.
6. Register a form of contextual help (otherwise the desktop default is displayed).

The only event, an application's event handler must respond to is the SE_CLOSE_APP event, for which the app should save pertinent data and close itself.

Java servlet-based applications residing on the pervasive computing device are required to:
1. Import Shell.SystemEvent
2. Import Shell.Shell
3. Implement Shell.ShellListener to handle receiving system events.
4. Call RegisterApplication on instantiation to inform application manager that app is running.
5. Register a form of contextual help (otherwise the desktop default is displayed).

Application registration - For either native or Java apps to appear on a button bar, a configuration data file is placed in a button info directory. Any program that installs an application is responsible for creating this file. It should have a name related to the app name and an extension of ".data".

Some data file names are reserved by the application manager. These are home.data, web.data, keypad.data, exit.data, logon.data, help.data, message.data, and timedate.data. The buttons generated by these data files are recorded for special use by the Application manager. For instance, no program need be associated with the help button because the Application manager recognizes this button's data file name and will use internal help functionality.

### Primary GUI components

**Photon windows -** Native application code uses Photon API to produce and draw within a Photon window. Application windows are the size of the Application Area and only one is ever visible at a time. Apps may also generate smaller dialog box windows. These windows should be used sparingly and be modal, meaning that the user can not use any other part of the application GUI until the dialog has been dismissed..

**Micro-browser -** Java servlet applications produce HTML/JavaScript which is delivered to and rendered by micro-browser native code into a micro-browser window. The micro-browser supports HTML 3.2 and JavaScript 1.1. Thus, the servlet can be self invoking.

**Button Bars -** Photon windows created by the Application manager containing button widgets. Each button maintains a pointer to data structure for determining what applications to display.

**Keypad -** is a Photon window created by the application manager to provide key entry capability on systems without hardware keyboards. The keypad creates a Photon front-most region which emits key events that travel back to the Photon window manager for distribution to the widget with focus.

**Java Servlet -** is invoked by the HTTP server upon receiving an HTTP request from a micro-browser. It generates HTML output which is then rendered by the micro-browser.

The Application and Status bars are highly configurable by the ISV (via the application manager configuration file) to suit the look and feel they desire. The bars are not end-user configurable. Buttons may be displayed as icons or text or both. The bar backgrounds may be a solid color or shaded by specifying a vertical set of pixel colors which is replicated across the bar. Buttons can also be configured by applications by sending GUI events to the application manager.

The Application Manager components are installed in a specific directory structure. The default base directory is /nto/shell, however, this may be changed by exporting the PVC_SHELL_PATH variable before invoking Application manager. Theme files are placed in the base directory. Button and icon directories may be placed anywhere, but are recommended for here as well. All executables are placed in the directory *base*/bin/*processor.* The Application manager also utilizes the PVC_HOME_PATH environment variable to determine where user accounts are installed on the device. If this variable is not specified, /home will be used.The Application manager expects the default user "default" to be in this directory.

When Application manager is started, it reads the default user's theme file, creates and populates button bars and starts the Home button's applications. If an application's *BackgroundProcess* key has a value of "yes", then the application is started immediately. Such an application should not realize, however, until it receives an SE_FOREGROUND event. This provides a mechanism for starting a monitor application which may or may not appear on the display at a later time.

### Runtime Activities:

**User presses an application button -** An application having a button residing on a Button Bar is activated for the first time. It appears in the foreground and an SE_BACKGROUND event is sent to the application previously in the foreground. If another button is subsequently pressed, that application is brought to the foreground. An SE_BACKGROUND event is sent to the application previously in the foreground, and an SE_FOREGROUND event is sent to the app now in the foreground.

**Application/Application manager interaction -** Applications may asynchronously call the Application manager to get the size of the Application Area or change the contextual help configuration. For instance, an app may change the help message depending on where the user is within the application.

**Hardware events -** The screen phone hardware may have several function specific buttons such as a "Home" button, a "WWW" button, or a scroll disc/wheel. The Application manager is responsible for interfacing to the hardware device driver and receiving the hardware generated event when a button is activated. The Application manager may utilize the event itself (for example, by bringing the Home page to the foreground), or may route the event to an application (for example, an SE_SCROLL_UP event).

**Close event -** Since pervasive computing devices are often resource constrained, there may be a need to close applications before others can be started. An application receiving an SE_CLOSE_APP event should save any state and terminate itself. This event is sent to background apps not running as a background process when the RAM requirements to start a new app are greater than free memory. Apps are closed until there should theoretically be enough RAM. The close process is asynchronous. The Application manager does not wait for any apps to close before launching the new app because the RAM requirements value is only a maximum usage value.

**Resize event -** the Application manager may dynamically resize the Application Area. In preparation for this, applications should handle the SE_CHANGE_APP_AREA event. Upon receiving this event, applications query the Application Area size via the GetApplicationArea function and resize/reposition their Photon window.

**Application request -** An application may request to be made the foreground application. This request may not be executed immediately, if for instance, a help dialog box is being displayed. An application may also request that a specific URL be displayed in the web browser. The browser will be made the foreground application and sent the URL to display.

**IPC Mechanism -** Since each application runs in a separate process, an IPC mechanism is used to communicate between apps and the Application Manager. Under Neutrino, system messages are used. Application manager API calls are marshaled into a send packet and sent to the application manager process by the application manager library code that an application links with. The Application manager's IPC component unmarshals the packet and calls the native application manager API. Java applications go through two additional layers since they call a Java API which then calls a native method. For an event handler callback, the Application manager calls its IPC component which marshals the call and sends the packet to a native process. The Application manager library code then unmarshals and routes the call to the native event handler. In the case of Java servlets, the native handler is within the Application manager native component and it determines which servlet object to invoke.

To send a message to a Neutrino application the application's process ID (PID) and channel ID (CHID) are identified. These values are used to establish a connection ID (COID). An Application Manager application is able to easily establish a connection with the Application manager because the Application manager's PID and CHID are published. However, the Application manager can not send messages to an app until it first receives a message from that APP which will identify that app's PID and CHID.

Below is a description of the steps the application manager and the application manager library (within a typical application) take to perform IPC:

| **Application Manager Process** | **Application Process** |
|---|---|
| **Initialization** | |
| PtAppAddInput(0) | |
| Save pid and chid to file | |
| Start application | |
| | Load application manager pid and chid |
| | PtAppAddInput(pid) |

| **Application Sends Message to Application manager** | |
|---|---|
| | coid = ConnectAttach(shell pid, chid, nto_side_channel) |
| | MsgSend(coid, msg) |
| ReceiveIPCMessage() called | |
| coid = ConnectAttach(app pid, chid, nto_side_channel) | |
| MsgReply(rcv_id) | |
| | unblocks and continues |

| **Application manager Sends Message to Application** | |
|---|---|
| MsgSend(coid, msg) | |
| | ReceiveIPCMessage() called |
| | MsgReply(rcv_id) |
| unblocks and continues | |

The _NTO_SIDE_CHANNEL attribute is used on ConnectAttach() so that Neutrino does not try to duplicate the connection file handle when the application manager spawns another process. Note that the Application manager code is hard coded to use a channel ID of 1. Should PtAppAddInput() ever create channels with a different ID, the application manager IPC mechanism will break.

Another IPC complication is that the J9 JVM is not a Photon application and thus can not use the PtAppAddInput function. It requires a separate thread to receive messages. However, J9 has a threading restriction similar to Photon. A Neutrino thread created to receive messages can not always successfully make JNI calls. The solution implemented in the application manager's Java code is to start a Java thread which calls down to a native message receive loop (thread blocking receive). Thus, when a servlet is called by the application manager, the JNI is performed on a thread created by the JVM. Therefore, the application manager library initialization code for the JVM is different than for native apps:

| **Application manager Process** | **JVM Process** |
|---|---|
| **Initialization** | |
| PtAppAddInput(0) | |
| | chid = ChannelCreate() |
| | start Java msg receive thread |
| | MsgReceive(chid) - blocking |

To provide this alternate message receiving mechanism, two Application manager library binaries are built from the same source. A single binary with two different code paths is undesirable because it would force the JVM to link with a Photon library, thus increasing its size.

### Public Methods/APIs

### Native Application manager API:

The application manager provides a set of native APIs for applications to use in order to share system resources such as the screen and hardware buttons. The application manager encapsulates certain system events. These events are sent to an application when appropriate. A native event is a pointer to a structure containing two fields:

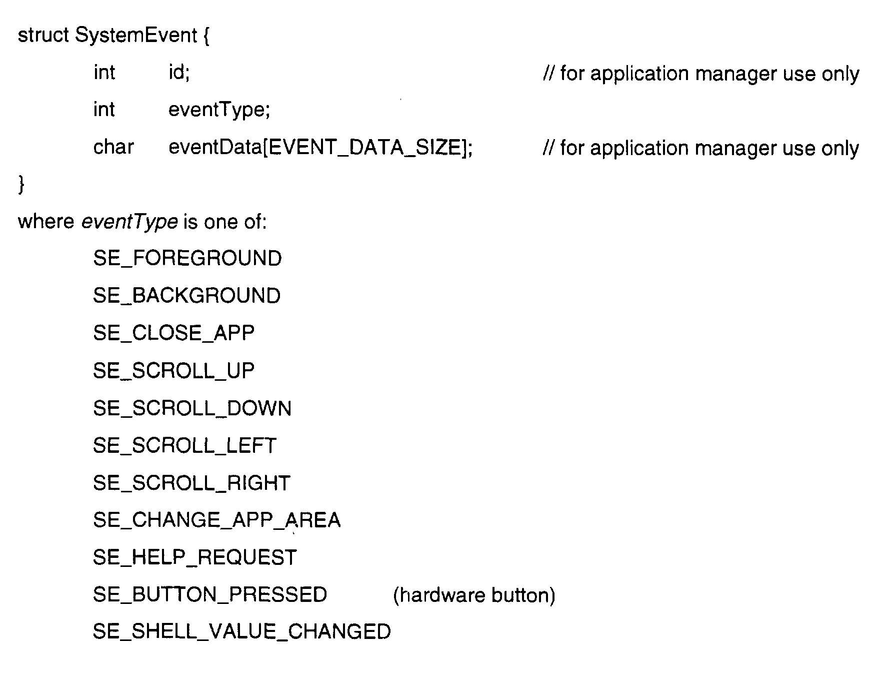

### General APIs:

### Void systemEventHandler(SystemEvent event);

This is callback function implemented by each application. The address of this function is passed to the application manager upon registration with the application manager. The function is called in order to deliver a system event.

### AID RegisterApplication(String programName, PtWidget_t* window, EventCallback systemEventHandler) ;

Each application calls this function when invoked. The value returned is a unique application ID which is used when calling some other API.

### Void UnregisterApplication(AID applicationID);

An application calls this function before it closes.

### RECT GetApplicationArea(AID applicationID);

This function is called by an application to determine the size and location of its Photon window. The return value is a RECT structure. This function is also called when the application receives a SE_CHANGE_APP_AREA event.

### Boolean IsForegroundApp(AID applicationID) ;

An application may call this function to determine if it is the foreground app. The caller provides the AID returned during application registration.

### Boolean RequestForeground(AID applicationID) ;

An application may call this function to request that it be displayed in the foreground. This is useful for an application such as caller ID which would want to immediately display the name/number of the person calling in.

### Void RequestURL(AID applicationID, String URL);

An application may call this function to request that the web browser display a new URL. The browser is brought to the foreground.

### Void SetShellValue (String name, String value);

An application may call this function to create or set a name/value object, which may then be queried by other applications. The maximum name length is MAX_NAME_LENGTH. The maximum value length is MAX_VALUE_LENGTH. When an event object is successfully created or changed, the application manager will send an SE_SHELL_VALUE_CHANGED event to all registered applications.

### Boolean GetShellValue(String name, String value);

An application may call this function to request the value of a previously set name/value object. If the object is found, the value is placed in the buffer pointed to by value, and the function returns SUCCESS, otherwise it returns FAILURE. The caller is responsible for providing a buffer large enough for the value.

### Void SendShellEvent(SystemEvent* event);

An application may call this function to send an event to the application manager. The application manager processes the event asynchronously. Events the application manager listens for are:
- AE_CHANGE_BUTTON - change the button text and/or bitmaps (in mem)
- AE_CHANGE_APP_PROGRAM - change the application's program value (in mem)
- AE_CHANGE_BUTTON_STATE - enable or disable button
- AE_SYSTEM_CALL - pass command string to be executed by the OS application manager
- AE_ADD_BUTTON - add a button to a bar
- AE_REMOVE_BUTTON - remove a button from a bar
- AE_RECONFIGURE_SHELL - force current user's theme to be re-read
- AE_START_ANIMATION - start "loading..." animation sequence
- AE_STOP_ANIMATION - stop "loading..." animation

### Help APIs

There are two ways for contextual help to be displayed when a user presses the Help button on the Application Bar. Either the application manager informs the foreground application via a SE_HELP_REQUEST event, or the application manager itself displays a dialog box with a help message. When an app is sent a help event, it can display help in its own fashion, which can include calling the RequestURL API to request that the browser display a particular URL. Note that the browser utilizes the whole Application Area though, and the user clicks on the app button to return to it. The following API allow an application to choose a preferred method. If an application registers more than one type of help method, only the first one found is used. The order in which the application manager handles a help request is:
a) send the foreground app a SE_HELP_REQUEST event
b) display the foreground app's registered help message in a pop-up window
c) display generic help in a pop-up window

### Boolean RegisterHelpEvent(AID applicationID);

This method is useful when an application wishes to display help in its own way. The function returns the value SUCCESS or FAILURE declaring whether registration was successful.

### Boolean RegisterHelpMessage(AID applicationID, String message);

This method is useful for native apps or servlets wishing to display a short help message. It has a limit of MAX_MESSAGE_LENGTH characters. The message is displayed in a pop-up window positioned at the center of the screen.

### Alert APIs

An application may signal the user by calling one of the following functions. In order to minimize confusion to the user, a non-foreground application should perform some form of alert being requesting to be switched to the foreground.

### Void AlertMessage(String message);

This function causes the application manager to display a short message to the user. If the message.data button has been installed, the message will appear on this button; otherwise, a system modal pop-up window positioned at the center of the screen with be displayed. Pressing OK closes the pop-up and returns control to the application.

### Int AlertQuery(String message, String buttonText[]);

This function causes the application manager to display a system modal pop-up window with the message and a number of buttons described by the buttonText array. The last buttonText element is a NULL element. The function returns the (1 based) number of the button pressed. The default button is button 1. The method is synchronous. Pressing any button closes the pop-up and returns control to the application.

### Void AlertBeep(int msBeepDuration);

This function causes a beep of specified milliseconds duration.

### Java Shell APIs

The application manager provides a set of Java APIs for servlets to use in order to share system resources such as the screen and hardware buttons. A servlet application creates an instance of the Application manager class in order to invoke application manager API. The application manager's Java classes are all within the com.ibm.shell package. The application manager encapsulates certain system events. These events will be sent to an application when appropriate. A Java event is an object of the SystemEvent class:

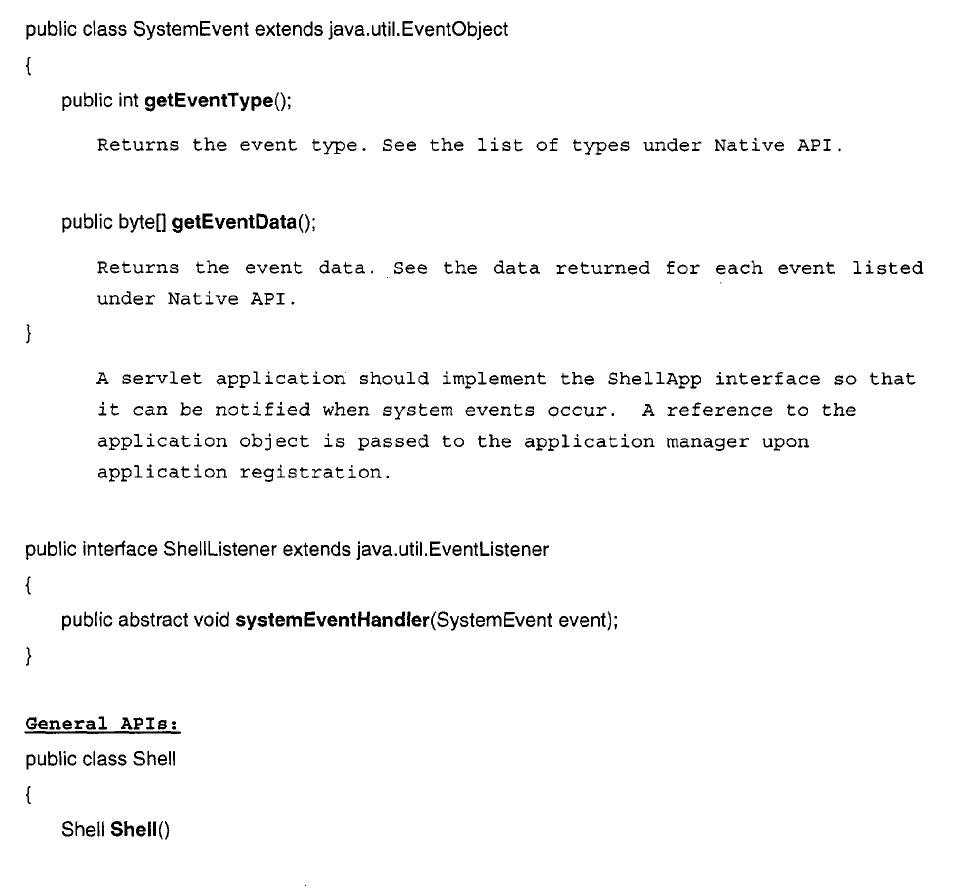

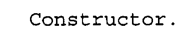

### public void RegisterServlet(String programName, ShellListener application) ;

Each application calls this function when is starts.

### public void UnregisterServlet();

Each application calls this function when is exits.

### public RECT GetApplicationArea();

This function is called by an application to determine the size and location of its Photon window. The return value is a RECT structure. This function is also called when the application receives a SE_CHANGE_APP_AREA event.

### public boolean IsForegroundApp();

An application may call this function to determine if it is the foreground app.

### public boolean RequestForeground();

An application may call this function to request that it be displayed in the foreground. This is useful for an application such as caller ID which would want to immediately display the name/number of the person calling in.

### public void RequestURL(String URL);

An servlet may call this function to request that its micro-browser display a new URL. The micro-browser is brought to the foreground.

### Void SetShellValue(String name, String value);

An application may call this function to create or set a name/value object, which may then be queried by other applications. The maximum name length is MAX_NAME_LENGTH. The maximum value length is MAX_VALUE_LENGTH. The name and value are ASCII characters. When an event object is successfully created or changed, the application manager will send an SE_SHELL_VALUE_CHANGED event to all registered applications.

### Boolean GetShellValue(String name, String value);

An application may call this function to request the value of a previously set name/value object. If the object is found, the value is placed in the buffer pointed to by value, and the function returns SUCCESS, otherwise it returns FAILURE. The caller is responsible for providing a buffer large enough for the value.

### Void SendShellEvent(SystemEvent* event) ;

An application may call this function to send an event to the application manager. The application manager processes the event asynchronously.

### Help API

### public boolean RegisterHelpEvent () ;

This method is useful when an application wishes to display help in its own way. The function returns the value SUCCESS or FAILURE declaring whether registration was successful.

### public boolean RegisterHelpMessage(String message) ;

This method is useful for native apps or servlets wishing to display a short help message. It has a limit of MAX_MESSAGE_LENGTH characters. The message is displayed in a pop-up window positioned at the center of the screen.

### Alert API

An application may signal the user by calling one of the following functions. In order to minimize confusion to the user, a non-foreground application should perform some form of alert being requesting to be switched to the foreground.

### public void AlertMessage(String message) ;

This function causes the application manager to display a pop-up window positioned at the center of the screen with the specified message and an OK button. Pressing OK closes the pop-up and returns control to the application.

### public int AlertQuery(String message, String buttonText[]);

This function causes the application manager to display a pop-up window with the message and a number of buttons described by the buttonText array. The last buttonText element is a NULL element. The function returns the (1 based) number of the button pressed. The default button is button 1. The button text may include the "&" character in front of a character to designate that character as the shortcut key. The method is synchronous. Pressing any button closes the pop-up and returns control to the application.

### public void AlertBeep(int msBeepDuration) ;

This function causes a beep of specified milliseconds duration.

### Interface Definitions

This section contains detailed descriptions of the interfaces to other components and the OS. Data structures, references to specifications.
Java interfaces to the native application manager API are provided in the Application manager package which servlets may import.

### Configuration Parameters

All of the Application Manager's configuration is kept in several classes of ini files. There is a (somewhat arbitary) line drawn between content provider configuration and user configuration. Provider configuration files are themes which define the look and feel of the user interface and screen layout and button description files which specifiy what applications are available and how they act. Users may only modify user configuration files such as user.settings and user.data. These include preferences such as font sizes and colors, home pages and proxy settings, and choice of theme. The following chart briefly describes each class of config file and its references to other configuration elements. Elements with brackets can have multiple instances per file.

### Theme configuration files

These files reside in the base Application manager directory and are given a descriptive base name with an extension of ".config". Themes are not user modifiable, but a user may be configured to use any theme available. The format of a theme file is standard key/value pairs under section headers. Section headers are unique.
# PvC Display Application manager Configuration File
   #
   # Note: all color attributes are 3 byte RGB values written in hex
   [Theme]
   Name=IAD Corporate Theme
# Button Info directory. (defaults to /nto/shell/ButtonInfo
   ButtonInfoDirectory=/nto/shell/iad-buttons
# For TimeFormat choose 12 or 24 hour
   TimeFormat=12
[Links]
   # The following link statements will be executed from the base shell directory.
   # The link syntax is alias=target
   # whereby the shell will execute "ln -sf target alias"
   iad-html/theme-images=theme-1-images
[Screen]
   # Viewable area dimensions in pixels
   Width=800
   Height=600
# Viewable area skew amounts in pixels (for use with TVs)
# These values will be added to all position coordinates
   SkewX=0
   SkewY=0
# Color of modal dialogs and keypad
   ModalColor=7379a5
   ModalTextColor=ffffff
# Number of seconds of inactivity before screen goes black
   ScreenSaveTimeout=0
# Should Application manager startup with black screen?
   ScreenSaveOnStart=No
# Should Application manager show loading animation for
   micro-browsers?
   # Number of frames in animation.
   # Base file name of animation frames. Frame number will be
   # substituted for %d (beginning with 1 and ending with frame count)
   ShowLoadingAnimation=No
   AnimationFrameCount=7
   AnimationBaseFileName=/nto/shell/iad-icons/anim%d.gif
# Background color or image file (currently used by Logon and Settings)
   #Color=000000
   Background=/nto/shell/iad-html/theme-images/folder.gif
   # Window sections describe the screen layout for this theme.
   # All windows are described in absolute screen coordinates.
   # Windows areas described here may overlap, but the set of windows
   # used for any particular button should not overlap.
[Window 1]
   Name=Background Bar
   Width=800
   Height=66
   PositionX=0
   PositionY=0
[Window 2]
   Name=Button Bar
   Width=400
   Height=40
   PositionX=390
   PositionY=13
[Window 3]
   Name=Advertising Bar
   Width=322
   Height=44
   PositionX=29
   PositionY=11
[Window 4]
   Name=Ticker Bar
   Width=800
   Height=42
   PositionX=0
   PositionY=558
[Window 5]
   Name=Base App Area
   Width=800
   Height=534
   PositionX=0
   PositionY=66
[Window 6]
   Name=Base Area with Ticker
   Width=800
   Height=492
   PositionX=0
   PositionY=66
[Window 7]
   Name=Animation Window
   Width=91
   Height=38
   PositionX=26
   PositionY=16
# Configuration sections for describing button bars.
   # Bars are created in reverse order such that bar 1 is topmost.
   [Bar 1]
# Name of window in which this bar will be placed
   Window=Button Bar
# BACKGROUND OPTIONS
   #Background image to display
   #Background=
# Solid background color of bar or wether transparent
   Color=4a5da5
   Transparent=No
# Should bar show background shading?
   ShowShading=No
# RGB color value of each vertical pixel. A value is provided for
   each
   # pixel in bar height allowing vertical slice to be replicated across
# entire width of bar.
   Shading=0,50,6e,82,96,c8,c8,c8,c8,c8, 96,96,96,96,8c,8c,8c,82,82,82, 78,78,6e,6e,64,64,50,0
# BUTTON OPTIONS
   # Show icons specified in button data files
   ShowIcons=Yes
# Whether icons use a transparent color and what that color is
   TransparentIcons=No
   #IconTransparencyColor=ffffff
# Button icon directory (default /nto/shell/icons)
   ButtonIconDirectory=/nto/shell/iad-icons
# The following item determines how selected buttons are rendered.
   # The choices are None, Icon, or Box. Icon selection requires that an
* IconFocused icon be defined in the button's data file.
   ButtonSelection=Icon
# Select a button if the mouse passes over it.
   AutoMouseSelection=Yes
# Select a button if focus is changed using the keyboard.
   AutoKeyboardSelection=No
# Determins whether button stays pressed/disabled when app is foreground.
   # This should not be Yes if Auto(Mouse/Keyboard)Selection is Yes.
   AutoButtonDisable=No
# Button alignment as a group (Center, Left, Right, Top or Bottom)
   Alignment=Right
# Number of pixels between buttons
   ButtonSpacing=0
# Evenly distribute varying size buttons
   EqualSizeButtons=Nc
# Show button text specified in button data files
   ShowText=No
# Color of button text (if text is displayed)
   TextColor=ffffe9
# Allow buttons on this bar to have overlayed text
   AllowOverlayText=No
# This is a sample of a bar displaying an image without any buttons
[Bar 2]
   # Name of window in which this bar will be placed
   Window=Background Bar
# BACKGROUND OPTIONS
   #Background image to display
   Background=/nto/shell/iad-icons/IADheader.gif

### Notes:

*TimeFormat* selects whether the time and date is displayed in 12 or 24 hour format. A timedate.data file describes a text-only or overlay button for the time to be displayed.
*AutoDisableEnable* selects whether buttons are disabled when their corresponding application is in the foreground. The button is automatically re-enabled when the app looses foreground.
*EqualSizeButtons* determines whether the application manager should attempt to make the buttons on a bar the same size. This is desirable if you wish to equally space variable width icons. If any button has an image or text extent greater than the specified size, the extent size will prevail.

### Button description files

Button description files reside in one or more directories pointed to by theme files. The format of a button file is standard key/value pairs under section headers. Section headers are unique.
# This configuration section describes the look and positioning
   # of a button on a button bar
   [Button]
# Name of this button (used internally only)
   Name=Home
# Text that will be displayed for this button in location
   # dependent upon the theme settings for this button's bar.
   # Possible positions are on icon, under icon, in place of icon, or
   # in a help bubble.
   Text=Home
# Icon images for this button. There can be three images which are
   # either bitmaps or gifs. An image may use one transparency color
# which needs to be specified in the bar config. Possible images are
   # Normal, when icon has focus or mouse over, and when icon is pressed or set.
   Icon=Home0.gif
   IconFocused=Home1.gif
   IconPressed=Home2.gif
# Height and Width of button if text or image extent is not to be used.
   #Height=50
   #Width=50
# Button bar preferred for this button (an ID specified by the Bar section number
   # used in the theme file. Default is 1)
   BarID=1
# Button position within bar. 0 is left or top most.
   Order=10
# Whether button is displayed on a bar or not
   Hidden=No
# Whether button is always selected in a user's configuration
   AlwaysSelected=No
# Whether button is pressable
   Enabled=Yes
# Whether this button should have its text overlay its icon
   OverlayText=No
# Keyboard scan code for a key which will activate this button
   KeyScanCode=59
   # App configuration sections describe what applications will be
   # started when this button is activated.
   [App 1]
# Name of this app (used internally only)
   Name=Home Page
# Theme window that this app will occupy
   Window=Base App Area
# Program or url to be started
   Program=file:///nto/shell/iad-html/main.htm
# Whether this app should be started during application manager initialization
   BackgroundProcess=No
# Whether this web based program should use a common web pane
   #CommonPane=Yes
# Whether this web based program should be reloaded when it is already
   # foreground and the button is activated
   RestartOnActivate=No
# The general RAM requirements of this program in KB (for use in
   # closing programs when RAM is constrained)
   RAMRequirements=300
# Frequency (in minutes) for reloading web based programs
   UpdateFrequency=30
# Bar sections describe what bars will be displayed
   # when this button is activated.
   [Bar 1]
   Name=Main Button Bar
# Event sections describe what event will be sent when this button is activated.
   [Event 1]
   EventType=500
# Ascii string to be sent in event
   EventData=
# The target of the event can be one of the following
   # app name - specified in some button description file
   # [foreground] - currently foreground apps
   # [shell] - event for shell to handle
   # [*] - all applications
   TargetApp=[foreground]

### NOTES:

*Name* is the same name specified when the application calls RegisterApplication.
Program is the name of the native program residing in the /nto/shell/bin/processor directory, or a URL starting with either file:// or http://. If no program is to be invoked or the button represents an internal function such as display of help, keypad, time or message, the field can be left blank.
*Enabled* specifies whether the button will display the normal or pressed bitmap and respond to being pressed. When disabled, the pressed bitmap will be displayed or the button text will be darkened/lightened (depending on text color).
*OverlayText* is used to display the button text over the top of a blank bitmap. This capability is required for the timedate and
message buttons, but may also be useful to reduce the total number of button bitmaps loaded on the system.
There may be multiple, sequentially numbered *App* sections.

### Micro-browser Settings

Initially, the micro-browser looks for a user.settings file in the user's home path. If not found, the default.settings file residing in the base Application manager directory is used. However, if Settings modifies settings for a particular user, a new settings file "user.settings" is created in that user's home directory. The contents of this file is described in the Voyager documentation.
It should be noted that only the first PtWebClient gets to set certain voyager.server parameters such as image cache size. Appearance parameters can be set per web client.

### User data files

Each user known to the Application Manager has a user.data file which describes the user and the applications shown for that user. These files reside under a user directory under the PVC_HOME_PATH.
The format of a button file is standard key/value pairs under section headers. These files are created and modifiable through the Settings application.
# User section describes this user
   [User]
# Human readable name of user
   UserName=Mark
# User's password (to be removed from this file at a later date)
   Password=
# User's priviledge level (where 0 is highest and 5 is lowest)
   Priviledge Level=0
# Theme configuration file
   Configuration=default.config
# Application buttons that will be shown for this user
   [Applications]
   Home=Yes
   Help=Yes

### System Resource Requirements

Each micro-browser instance takes 57k of global memory and 16k of heap space.

| | |
|---|---|
| EVENT_DATA_SIZE | 300 |
| MAX_MESSAGE_LENGTH | 300 |
| MAX_URL_LEN | EVENT_DATA_SIZE |
| MAX_PATH_LENGTH | EVENT_DATA_SIZE |
| MAX_FILENAME_LENGTH | 32 |
| MAX_TITLE_LENGTH | 50 (for button bars) |
| MAX_ALERT_BUTTONS | 3 |
| MAX_BUTTON_TEXT | 40 (for AlertQuery) |
| MAX_APPLICATIONS | 30 |

One of the preferred embodiements of the invention is a client application, namely, a set of instructions (program code) in a code module which may, for example, be resident in the random access memory of the computer. Until required by the computer, the set of instructions may be stored in another computer memory, for example, in a hard disk drive, or in a removable memory such as an optical disk (for eventual use in a CD ROM) or floppy disk (for eventual use in a floppy disk drive), or downloaded via the Internet or other computer network. Thus, the present invention may be implemented as a computer program product for use in a computer. In addition, although the various methods described are conveniently implemented in a general purpose computer selectively activated or reconfigured by software, one of ordinary skill in the art would also recognize that such methods may be carried out in hardware, in firmware, or in more specialized apparatus constructed to perform the required method steps.

While particular embodiments of the present invention have been shown and described, it will be obvious to those skilled in the art that, based upon the teachings herein, changes and modifications may be made without departing from this invention and its broader aspects.

## Claims

1. A method for displaying native and non-native applications on a pervasive computing device, said method comprising:
configuring a native application window, the configuring performed by an application manager (110);
configuring a non-native application window, the configuring performed by an application manager;
rendering (445) the native application window into a first display area; and
rendering (470) the non-native application window into a second display area, wherein the second display area is provided by a micro-browser.

2. The method as described in claim 1 further comprising:
configuring a button bar, the configuring performed by the application manager, and the button bar including one or more native application command buttons and one or more non-native application command buttons; and
displaying the button bar on the display.

3. The method as described in claim 1 or claim 2 further comprising: generating one or more events;
passing data related to the one or more events to one or more event handlers associated with the native and non-native application windows;
handling the events by the event handlers;
rendering one or more graphics in response to the handled events; and displaying the one or more graphics on the micro-browser display.

4. The method as described in any preceding claim further comprising:
accessing a computer network from the pervasive computing device;
receiving non-native code from a second computer attached to the computer network; and
wherein rendering the non-native application window is responsively determined from the received non-native code.

5. The method as described in any preceding claim further comprising:
writing logical layer position information related to native and non-native application windows to a z-order stack; and
reading the z-order stack to manage the logical layering of native and non-native application windows by the application manager.

6. A pervasive computing device comprising:
one or more processors;
a memory accessible by the processors;
a display screen operatively coupled to the processors;
a nonvolatile storage area accessible by the processors;
a native application stored in the nonvolatile storage area; and
an application manager executed by the processors, the application manager including:
means for coordinating the execution of the native and a non-native application; and
means for rendering the non-native application in a micro-browser, wherein the micro-browser is displayed on the display screen.

7. The pervasive computing device as described in claim 6 further comprising:
a button bar displayed on the display screen, the button bar including command buttons for the native and non-native applications.

8. The pervasive computing device as described in either claim 6 or claim 7 further comprising:
an event generator executed by the processors;
one or more events generated by the event generator;
a native event handler associated with the native application wherein the native event handler receives and handles events generated for the native application; and
a non-native event handler associated with the non-native application, wherein the non-native event handler receives and handles events generated for the non-native application.

9. The pervasive computing device as described in any of claims 6 to 8 further comprising:
a network interface accessible by the processors; and
a computer network that sends data received by the network interface, wherein the data includes the non-native application.

10. A computer program comprising instructions, which when run of a data processing system causes said system to carry out the method as claimed in any of claims 1 to 5.
